# EUROPEAN PATENT APPLICATION

(11) **EP 1 372 310 A1**
(43) Date of publication of application: **17.12.2003**
(21) Application number: 02291459.2
(22) Date of filing: 12.06.2002
(51) Int. Cl.: H04L 29/06, H04L 1/18

(54) **Apparatus and method for communicating data using header compression**

(71) Applicant: MOTOROLA, INC., Schaumburg, IL 60196 (US)
(72) Inventor: Ban, Al-Bakri, c/o Motorola GTSS, 94230 Cachan (FR)
(74) Representative: McCormack, Derek James

(57) **Abstract**

The invention relates to a system for communicating packet data using a variable header compression protocol. A packet protocol residing in a first layer of a layered network structure (300) comprises a protocol for variable header compression. The data is ordered in at least one packet data unit (501) and the packet data unit is communicated (511) in accordance with a radio link control protocol. The radio link control protocol resides at a lower level than the packet protocol and comprising at least one acknowledged and one unacknowledged mode. The apparatus comprises a selector (411, 607) for selecting either an unacknowledged mode or an acknowledged mode in response to a header compression characteristic of the packet protocol applied to the packet data unit. The invention is suited for cellular communication systems and specifically for 3G communication systems.

## Description

### Field of the invention

The invention relates to an apparatus and method for communicating data using header compression, and in particular to a system of communication in a layered network structure such as the Universal Mobile Telecommunication System (UMTS).

### Background of the Invention

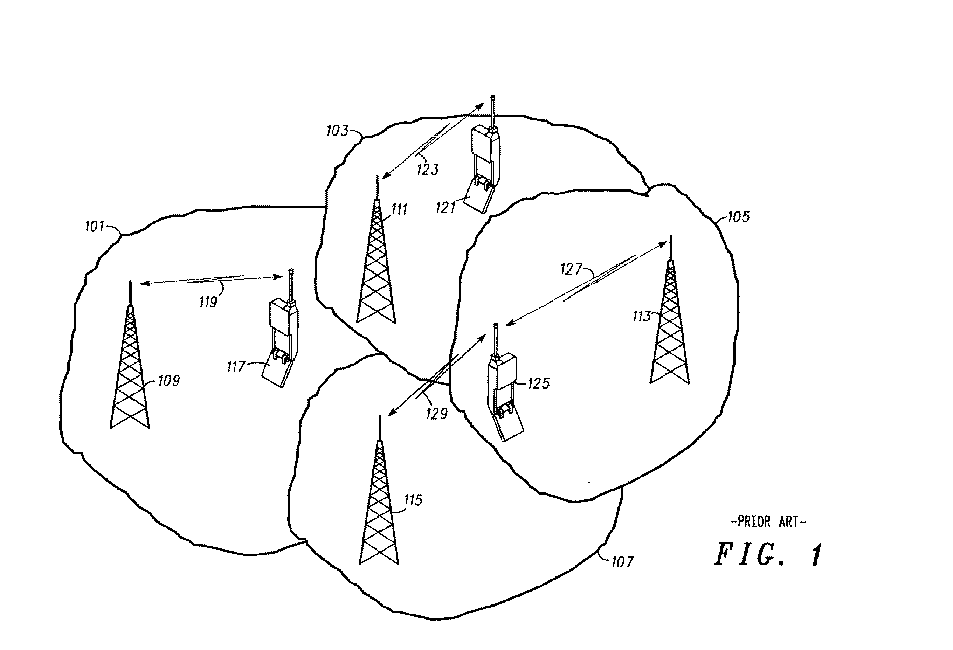

FIG. 1 illustrates the principle of a conventional cellular communication system 100 in accordance with prior art. A geographical region is divided into a number of cells 101, 103, 105, 107 each of which is served by base station 109, 111, 113, 115. The base stations are interconnected by a fixed network which can communicate data between the base stations 101, 103, 105, 107. A mobile station is served via a radio communication link by the base station of the cell within which the mobile station is situated. In the example if FIG. 1, mobile station 117 is served by base station 109 over radio link 119, mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115, it enters a region of overlapping coverage of the two base stations 111 and 113 and within this overlap region it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundred or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Examples of widespread cellular communication systems are 1^{st} generation analogue systems such as NMT (Nordic Mobile Telephone system) or AMPS (Advanced Mobile Phone Service) or 2^{nd} Generation digital systems such as the Global System for Mobile communication (GSM). Currently 3^{rd} generation systems are being deployed and developed. A standardisation process of 3^{rd} Generation systems is undertaken by the Third Generation Partnership (3GPP) standards bodies, which is a partnership of a number of regional standard bodies including ETSI (European Telecommunication Standards Institute), ARIB ( Association of Radio Industries and Business), TTA (Telecommunications Technology Association) and others. The initial versions of standards for the 3^{rd} Generation system UMTS (Universal Mobile Telecommunication System) have been completed and work is ongoing on updating and further developing these initial versions.

Conventional 1^{st} and 2^{nd} Generation cellular communication systems are based on connection oriented communication between a source and a destination, at least one of which is a typically mobile communication terminal of the cellular communication system. In a connection based system, a communication link is semi-permanently formed between the source and the destination thereby crating a bit pipe that is consequently used for the communication. The link is a logical connection but this is typically reflected in a physical connection. For example the routing through the fixed network is setup at call initiation and not changed until the call is ended.

A connection based approach is suitable for a continuous communication link for real-time data where transmission delays need to be guaranteed. However, the connection based approach is less suited for data of a bursty nature, and is not an efficient routing method for delay insensitive data. Consequently, a connectionless mode is optimally used for transmission of packet data. In this mode, data is at the source organised into a number of discrete data packets. Each data packet is transmitted independently, and independently routed through the fixed network to the source. Each packet comprises the address of the destination, which is used for routing the packet. The routing from source to destination may take different paths for different packets, and no permanently allocated resource is reserved by the fixed network.

An example of connectionless packet based system is the General Radio Packet Service (GPRS) which has been developed as an enhancement to GSM. UMTS is based on GSM and GPRS and is thus another example of a communication system comprising a connectionless mode.

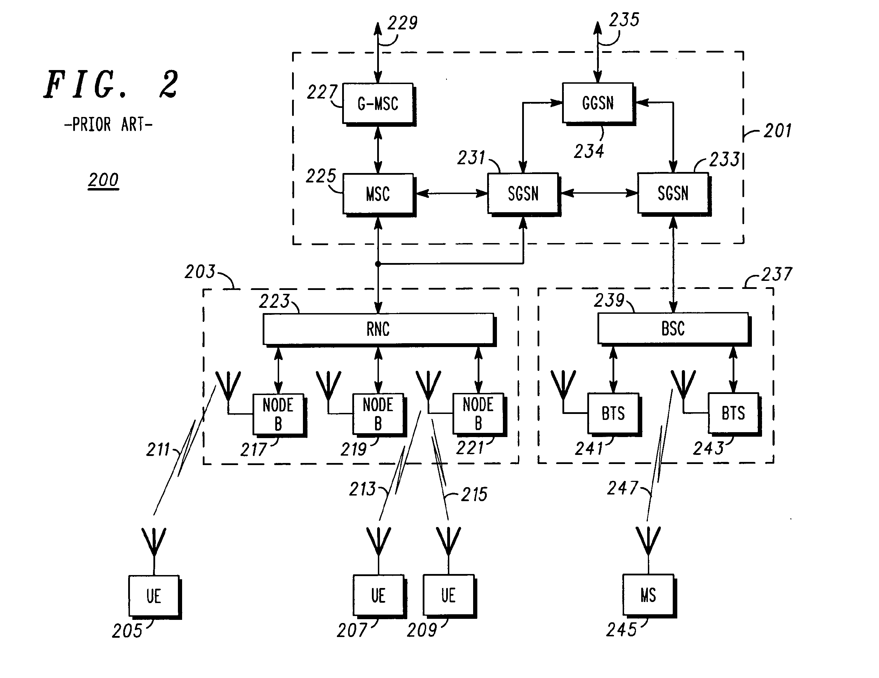

Fig. 2 illustrates the network architecture of a UMTS communication system in accordance with prior art.

In a UMTS WCDMA communication system, the communication network comprises a core network (CN) 201 and a Radio Access Network (RAN) 203. The core network 201 is operable to route data from one part of the RAN 203 to another, as well as interfacing with other communication systems. In addition, it performs many of the operation and management functions of a cellular communication system, such as billing. The RAN 203 is operable to support wireless user equipment 205, 207, 209 over radio links 211, 213, 215 being part of the air interface. The wireless user equipment may be a mobile station, a communication terminal, a personal digital assistant, a laptop computer, an embedded communication processor or any communication element communicating over the air interface.

A user equipment 205 in a UMTS communication system communicates with a base station 217. The base stations in UMTS are known as Node B's and are responsible for much of the functionality required for communication over the radio air interface. As such, the base stations comprise radio transmitters, receivers as well the required control circuitry. A plurality of base stations 217, 219, 221 are connected to a Radio Network Controller (RNC) 223. The RNC performs many of the control functions related to the air interface including radio resource management and routing of data to and from appropriate Node Bs 217, 219, 223. It further provides the interface between the RAN 203 and the CN 201. An RNC and associated Node Bs is known as a Radio Network System (RNS). For clarity, FIG. 2 shows the RAN 203 only having one RNS but typical RANs will have a high number of RNSs.

For conventional connection based services, also known as circuit switched services, the RNC 223 interfaces to a Master Switch Center (MSC) 225. The MSC 225 is in charge of switching the incoming data streams from different user equipment to the appropriate output streams for the call destination. Specifically, the MSC 225 may switch the data to another MSC 227, which specifically may be a Gateway- MSC (GMSC) comprising an interface 229 to an external network such as the PSTN. The MSC and GMSC may be the same entity.

The MSC is based on circuit switched operation such that a semi-permanent connection is formed from input to output. The switching for a given user equipment is thus infrequently changed. An example of an action that may result in an alteration of the switching is when a user equipment performs a handover between base stations. Typically, each MSC has a capacity of several million subscribers and only one or very few MSCs are included in a given CN.

For connectionless, or packet switched, operation, the RNC 223 is connected to a Serving GPRS Support Node (SGSN) 231. A CN typically comprise a number of SGSNs, which are operable to route data packets between other GPRS Support Nodes (GSNs) and RNCs such that packets are routed through to the destination. The operation of GSNs is packet based, and each packet is routed independently. Hence the routing of data between a source and a destination will typically change dynamically, and may be different for each data packet.

An SGSN performs the function of interfacing with an RNC and/or other GSNs. Another type of GSN is a Gateway GPRS Support Node (GGSN), which route data packets similarly to an SGSN but further comprises functionality for interfacing with external packet communication networks, such as the Internet. Hence, the SGSN 231 is connected to another SGSN 233 as well as a GGSN 234 having an interface 235 to an external communication network. The SGSN 225 is furthermore connected to the MSC 225 for accessing relevant subscriber information. Specifically, the SGSN connects to a Home Location Register (HLR) and Visitor Location Register (VLR) in order to obtain required subscriber and mobility management information.

The CN may also be connected to other RANs. FIG. 2_illustrates the CN 201 being connected to a second RAN 237 through an SGSN 233. The second RAN may be a different system to the first one, and in the shown example the first RAN 203 is a UMTS RAN, known as a UMTS Terrestrial Radio Access Network (UTRAN), whereas the second is a GPRS GSM based RAN 237. The second RAN 237 is shown to comprise a Base Station Controller (BSC) 239 interfacing to two Base Transceiver Stations (BTS) 241, 243. One of the BTSs 243 is communicating with a GSM GPRS Mobile Station (MS) 245 over a GSM GPRS radio link 247. The ability of the CN to interface to different RANs allows for simple and efficient integration of different communication systems.

As illustrated, a cellular communication system is complex and comprises many different entities and interfaces. The level of control and data exchanged between different entities is wide ranging from specific parameters associated with the physical communication medium to general application parameters. Therefore a number of protocols are used in the communication system. The exact protocol used for a specific communication link depends on which entities are communicated between and the nature of the data communicated.

In order to achieve a structured approach, each protocol is divided into layers with each layer dealing with a specific set of parameters of the communication. Each layer provides a specific communication medium to the higher layers meeting a given set of requirements. For example, the lowest layer guarantees a medium meeting a certain error characteristic to the next layer. However, meeting this error characteristic is achieved in by functionality in the lowest layer without any interaction from the next layer. Hence, communication systems, such as UMTS, employ a layered network structure. Further details can be found in 3GPP Technical Specification TS 25.331.

In a packet based system, the packets comprise headers containing information related to implementing the protocols. Each layer will typically take a packet from the higher layer and add a header to this data packet implementing the required communication for the layer. E.g. the lowest layer for the air interface may add a header comprising information related to the received bit error rate. Hence, the total header data comprising the headers for all layers can be of a very significant size. Communicating this information is wasteful in terms of resource, and therefore it is preferable to minimise the header data communicated, especially over the air interface. Consequently, communication systems, such as UMTS, use header compression whereby only part of the header data is transmitted. The header compression depends on how much the header information changes and on how much information has already been communicated.

The header compression is implemented in a given layer of a protocol. The header is then communicated using the communication medium provided by the lower layer. This communication medium is chosen at call setup based on Quality of Service (QoS) parameters such as required error rate, maximum throughput delay etc.

However, communicating data by choosing a communication setup based only on the quality of service parameters determined at call setup results in inefficient resource usage since specific dynamic conditions of the system cannot be taken into account. Hence, an improved system for communicating data would be advantageous.

### Summary of the Invention

The inventors of the current invention have realised that an improved method of communicating data can be achieved by allowing a dynamic choice of different transmission mediums from lower layers in response to current conditions of the communication system. Specifically, the inventors have realised that a choice of transmission medium in response to a level of header compression is advantageous.

Accordingly there is provided a method of communicating packet data for a cellular communication system having a layered network structure communicating with at least one user equipment, a first layer of the layered network structure comprising a packet protocol having a protocol for variable header compression; ordering the data in at least one packet data unit comprising header information in accordance with the packet protocol; communicating the packet data unit in accordance with a radio link control protocol; the radio link control protocol residing at a lower level of the layered network structure and comprising at least one acknowledged and one unacknowledged mode; characterised by further comprising the step of: selecting a selected mode of the radio link control protocol as an unacknowledged mode or as an acknowledged mode in response to a header compression of the packet protocol applied to the packet data unit.

Using an unacknowledged or acknowledged protocol of the radio link control protocol dependent on the header compression used in a higher level allows a more optimal radio link control protocol being chosen for the current situation. The inventor have realised that the impact of different radio link control parameters is different for different header compressions. In conventional systems, retransmissions due to faulty header information will be handled by the layer handling the header compressions, which is time consuming and wasteful if large headers are communicated (i.e. with little or no header compression). In accordance with the invention, an acknowledged mode of operation can be used by the radio link protocol thereby guaranteeing that the reliable communication of the header is handled by the radio link control layer, which is more efficient, less complex and has less delay than handling it in the header compression layer. For shorter headers (i.e. with more compression) errors in the header are less likely, and retransmissions handled by the header compression layer become faster and less resource demanding. However, the overhead required by the acknowledged mode compared to the unacknowledged mode increases or remains unchanged. Hence, in this case, it is optimal to select an unacknowledged mode of the radio link control protocol. Thus the invention provides the advantage of an optimal choice of acknowledged or unacknowledged mode of the radio link protocol for the given header compression operating conditions.

According to a first feature of the invention, the selection of the selected mode is further in response to a delay sensitivity of the data. Retransmissions can significantly increase the throughput delay and as the choice between the acknowledged mode and the unacknowledged mode affects the number of retransmissions, this feature provides the advantage of optimising the selection such that the delay characteristics for a given service is taken into account.

According to a second feature of the invention the selection of the selected mode is further in response to a sensitivity of the data to packet loss. The choice between the acknowledged mode and the unacknowledged mode affects the achieved resulting error rate and this feature provides the advantage of optimising the selection such that the error characteristics for a given service is taken into account.

According to a third feature of the invention the selection of the selected mode is in response to whether the packet protocol is using an acknowledged mode. The packet protocol may directly include an acknowledged mode and this may provide some of the functions and results achieved in the radio link control acknowledged mode. Therefore, choosing between the acknowledged mode and unacknowledged mode can be further optimised by taken into account if the data protocol uses a feedback mechanism. The acknowledged mode of the packet protocol may be indirect by being part of a second protocol uses by the data protocol and specifically by being part of a header compression scheme used by the data protocol.

According to a fourth and fifth feature the step of selection comprises selecting the unacknowledged mode when the header compression characteristic corresponds to a header compression above a threshold and selecting the acknowledged mode when the header compression characteristic corresponds to a header compression below the threshold, and specifically the step of selection comprises selecting the unacknowledged mode when the header compression characteristic indicates that header compression is used by the packet protocol and selecting the acknowledged mode when the header compression characteristic indicates that header compression is not used by the packet protocol. This provides for a simple yet highly efficient decision criterion.

According to a sixth feature of the invention, the packet data unit is communicated over an air interface and thus the method meets all the requirements, characteristics and problems of a radio communication in e.g. a cellular communication system.

According to a seventh feature of the invention, a plurality of packet data units are communicated and the step of selection comprises dynamically updating the selection of the selected mode. Specifically, the step of selection selects the selected mode of each packet data unit in response to the header compression of the packet protocol applied to that packet data unit.

Thus the system provides a method for continuously optimising selected mode of the radio link control protocol to suit the current conditions.

Preferably, the communication system is a Universal Mobile Telecommunication System (UMTS) cellular communication system, the packet protocol is a Packet Data Convergence Protocol (PDCP) substantially as defined in Third Generation Partnership Project (3GPP) specification TS 25.323, the unacknowledged mode is a Radio Link Control- Unacknowledged Mode (RLC-UM) or a Radio Link Control-Transparent Mode (RLC-TM) substantially as defined in the Third Generation Partnership Project (3GPP) specification TS 25.322, the unacknowledged mode is a Radio Link Control- Acknowledged Mode (RLC-AM) substantially as defined in the Third Generation Partnership Project (3GPP) specification TS 25.322, and the header compression is according to a Robust Header Compression (ROCH) substantially as defined in Internet Engineering Task Force (IETF) specification RFC 3095.

Thus preferably the method specifically meets all the requirements, characteristics and specific problems of a third generation cellular communication system.

According to a second aspect of the invention, there is provided an apparatus for communicating data in a cellular communication system having a layered network structure communicating with at least one user equipment, a first layer of the layered network structure comprising a packet protocol having an protocol for variable header compression; the apparatus comprising: means for ordering the data in at least one packet data unit comprising header information in accordance with the packet protocol; means for communicating the packet data unit in accordance with a radio link control protocol; the radio link control protocol residing at a lower level of the layered network structure than the packet protocol and comprising at least one acknowledged and one unacknowledged mode; characterised by further comprising: selection means for selecting a selected mode of the radio link control protocol as an unacknowledged mode or as an acknowledged mode in response to a header compression characteristic of the packet protocol applied to the packet data unit.

According to a third aspect of the invention, there is provided a method of receiving data for a cellular communication system having a layered network structure communicating with at least one user equipment, a first layer of the layered network structure comprising a packet protocol having a protocol for variable header compression; receiving at least one packet data unit in accordance with a radio link control protocol; the radio link control protocol residing at a lower level of the layered network structure than the packet protocol and comprising at least one acknowledged and one unacknowledged mode and the packet data unit comprising header information; decoding the data in the packet data unit in accordance with the packet protocol; characterised by further comprising the step of:selecting a selected mode of the radio link control protocol as an unacknowledged mode or as an acknowledged mode in response to a header compression characteristic of the packet protocol applied to the packet data unit.

According to a fourth aspect of the invention, there is provided an apparatus for receiving data in a cellular communication system having a layered network structure communicating with at least one user equipment, a first layer of the layered network structure comprising a packet protocol having a protocol for variable header compression; the apparatus comprising: means for receiving at least one packet data unit in accordance with a radio link control protocol; the radio link control protocol residing at a lower level of the layered network structure than the packet protocol and comprising at least one acknowledged and one unacknowledged mode and the packet data unit comprising header information; means for decoding the data in the packet data unit in accordance with the packet protocol; characterised by further comprising: means for selecting a selected mode of the radio link control protocol as an unacknowledged mode or as an acknowledged mode in response to a header compression characteristic of the packet protocol applied to the packet data unit.

### Brief Description of the Drawings

An embodiment of the invention will be described, by way of example only, with reference to the drawings, in which
FIG 1. is an illustration of a cellular communication system in accordance with the prior art;
Fig. 2 illustrates a network architecture of a UMTS communication system in accordance with prior art;
FIG. 3 is an illustration of layers 1 to 2 of the packet data communication protocol for the air interface of a UMTS communication system suitable for an embodiment of the invention;
FIG. 4 is an illustration of an apparatus for communication of data in accordance with an embodiment of the invention;
FIG. 5 is an illustration of a flowchart of the operation of the apparatus of FIG. 4 in accordance with an embodiment of the invention; and
FIG. 6 is an illustration of an embodiment of a receiving apparatus in accordance with an embodiment of the invention.

### Detailed Description of a Preferred Embodiment of the Invention

For clarity, the following description of a preferred embodiment of the invention focuses on the application in a UMTS cellular communication system. However, it will be clear that the invention is not limited to this application but can be used in any suitable communication system.

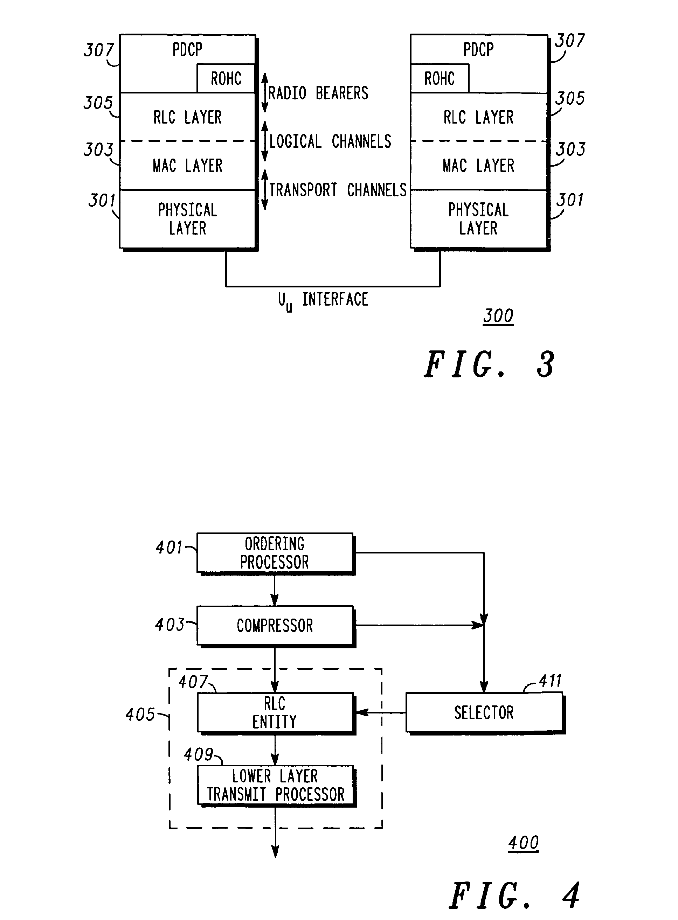

FIG. 3 is an illustration of layers 1 to 2 of the packet data communication protocol for the air interface of a UMTS communication system suitable for an embodiment of the invention. The air interface is known as the Uu interface in UMTS.

FIG. 3 shows the layers for a transmitting entity and the symmetric layers for a receiving entity. For communication in the uplink direction, the user equipment is the transmitting entity and the base station is the receiving entity, and vice versa for communication in the downlink direction.

The lowest layer, layer 1, in the protocol is the physical layer 301. The physical layer provides the access to the physical transmission medium, i.e. to the radio domain, and interfaces to the physical and electrical characteristics of this. As such, the physical layer is responsible for handling the radio communication including modulation, forward error correcting coding, power control loops etc. The physical layer provides transport channels for communication to the higher layers. Further definition of the characteristics of the physical layer can be found in 3GPP specification 3GPP TS 25.201.

Layer 2 of the protocol is divided into two or more sublayers. The first sublayer is the Medium Access Control (MAC) layer 303. The MAC layer is responsible for allocation of radio resources and as such comprises schedulers etc. The function of the MAC layer can be considered to be the mapping of the physical transport channels provided by the physical layer to logical channels, which are provided to upper layers.

The second sublayer of layer 2 is the Radio Link Control (RLC) layer 305. The RLC layer 305 is responsible for segmentation and reassembly of data packets received from higher layers into data packets suitable for communication using the logical layers provided by the MAC layer 303. The RLC layer 303 is further responsible for the flow control and link control of the data packets. For example, depending on the radio conditions different levels of error coding etc may be required for achieving a specific quality of service. The RLC layer 305 is responsible for selecting the appropriate level of error coding and segmenting the data into appropriate RLC blocks, which can be communicated by the logical channels.

Specifically, the RLC layer is also responsible for implementing Automatic Repeat Request (ARQ) schemes, if required. These schemes are used for reducing the error rate in a packet based communication. According to the basic principle, packets transmitted and received without errors (following any forward error correcting coding and decoding that may be employed) are acknowledged by the destination. Thus the receiving entity transmits and ACKnowledge (ACK) message to the transmitting entity to indicate that a packet was received without errors. Typically, an ACK message provides acknowledgement for a group of packets. If the destination receives one or more packets with errors, or according to an algorithm determines that it has not received a packet, it transmits a Negative ACKnowledge (NACK) message back to the source. Typically, the NACK message comprises information enabling the source to determine which transmitted packet was the last received without errors, and upon receiving the NACK message, the source continues to re-transmit packets starting with the first packet not acknowledged. The resultant error rate of packets is thus significantly improved as any packets received with errors are retransmitted until they are received without errors. The ACK/NACK messages and extra retransmission use additional communication resource but in a typical cellular communication system, this additional resource consumption is significantly less than the additional resource required for error correcting coding or increased signal to noise ratio to achieve the same overall data rate.

Specifically, the RLC protocol comprises different communication protocols wherein some use ARQ schemes and some do not.

The RLC Unacknowledged Mode (RLC-UM) does not include any form of feedback mechanism, and therefore does not guarantee delivery to the receiving entity. Consequently, the error rate may be high, and there is no certainty at the receiving entity as to whether a data packet has been received or not.

Likewise the RLC Transparent Mode (RLC-TM) is an unacknowledged mode which does not have a feedback mechanism. Consequently, the resulting error rate may be higher and there is no knowledge at the transmitting end whether a packet has been successfully received. Both RLC-TM and RLC-UM are unacknowledged modes but differ in the specific characteristics for the transmission of data packets. Further information can be found in 3GPP technical specification TS 25.301.

The RLC Acknowledged Mode (RLC-AM) comprises an ARQ scheme and therefore requires a positive acknowledgement related to each data packet. Consequently, an error free communication can be guaranteed, and there will be certainty at the receiving end that the transmitted data packets have been received. However, resource requirements and delay may increase significantly due to the requirement of retransmission of data packets received with errors.

Further definition of the MAC layer and the RLC layer including the RLC-UM, RLC-TM and RLC-AM modes can be found in 3GPP specifications TS 23.321 and TS 25.322.

The layer 2 provides what in UMTS is known as radio bearers. A radio bearer is a communication medium meeting a certain set of quality of service characteristics, such as a specific error rate, data rate or capacity, delay etc. In the prior art of UMTS, the characteristics of the radio bearer are chosen at call setup and not changed throughout a session. In order to meet this set of quality of service characteristics of the radio bearer, a specific configuration of the channels provided by the RLC layer is chosen at call setup and maintained for the entire session.

For packet based user data communication, the upper sub-layer of layer 2 of the Uu protocol comprises the Packet Data Convergence Protocol (PDCP) which is responsible for a number of functions including transfer of user data and support for lossless serving RNS relocation and optional and variable header compression.

The PDCP layer thus includes different modes wherein some comprise header compression and some do not. Hence, header compression is optional for PDCP Packet Data Units (data packets, PDUs) and the actual header compression may be dynamically altered between packet data units for an ongoing session. For UMTS, a header compression scheme know as ROCH (RObust Header Compression) has been standardised for headers such as RTP/UDP/IP (Real-Time Transport Protocol, User Datagram Protocol, Internet Protocol), UDP/IP, and ESP/IP (encapsulating Security Payload) headers. In ROCH, a compressor is thus embedded in the PDPC layer of the transmitting entity and a ROCH de-compressor is embedded in the PDPC layer of the receiving entity. Typically a communication unit is both a receiving and a transmitting entity and most PDPC layers therefore implements both a compressor and a de-compressor.

In accordance with the ROHC protocol, the PDUs will initially start with no compression and gradually a compression index of known unchanged information will be built up. Thus the compression algorithm operates by omitting header information, which has not changed from previous packets, and as the compression index of known information is increased more and more data can be omitted, and the size of the header can be reduced. Thus compression initially starts poor and improves until all fields that can be compressed have been optimally compressed. The ROHC scheme is not only used in UMTS but has been standardised for use in IP based systems including the Internet. Further information on ROHC header compression in UMTS can be found in 3GPP document TR 25.860 and the definition of ROHC can be found in Internet Engineering Task Force (IETF) specification RFC 3095.

RFC 3095 specifies different modes of ROHC as described below.

Unidirectional mode (U-mode): When in the Unidirectional mode of operation, packets are sent in one direction only: from compressor to de-compressor. This mode therefore makes ROHC usable over links where a return path from de-compressor to compressor is unavailable or undesirable.

Bi-directional Optimistic mode (O-mode): The Bidirectional Optimistic mode is similar to the Unidirectional mode except that that a feedback channel is used to send error recovery requests and (optionally) acknowledgments of significant context updates from de-compressor to compressor. Periodic refreshes are not used in the Bidirectional optimistic mode.

Bi-directional Reliable mode (R-mode): The Bidirectional Reliable mode differs in many ways from the previous two. Most importantly, the feedback channel is used significantly more intensively and a strict protocol prevents loss of context synchronization between compressor and de-compressor except for very high residual bit error rates. Feedback is sent to acknowledge all context updates and not every packet updates the context in Reliable mode.

Thus similarly to the RLC layer ROHC comprises an optional feedback protocol which can be used to reduce or virtually eliminate errors in the header. However, the retransmissions in by the ROHC algorithm are complec, time consuming and requires significant amounts of resource. Therefore, the the ROHC algorithm imposes a number of requirements on the link layer to optimise its operation.

Hence in conventional packet communication, a radio bearer, and thus an RLC configuration, is determined for the session based on an overall quality of service requirement. Hence, dependent on the quality of service requirement of the session either an RLC configuration with or a configuration without a feedback mechanism will be used for the session.

FIG. 4 is an illustration of an apparatus 400 for communication of data in accordance with an embodiment of the invention. For brevity only the elements necessary for describing the embodiment have been included, and it will be apparent to the person skilled in the art that a number of other functions necessary for communicating data are performed by the apparatus or by apparatus associated with the described apparatus.

The apparatus comprises a packet processor 401 for ordering the data in at least one packet data unit comprising header information in accordance with the packet protocol. Thus, data to be communicated by the apparatus is divided into data packets or packet data units appropriate for being communicated through a packet communication system. This is done in accordance with a packet protocol, and in the preferred embodiment, the packet processor is a PDPC entity which arranges the PDU in accordance with the PDCP protocol.

The packet protocol comprises variable header compression wherein different levels of header compression can be employed. In the preferred embodiment, this header compression is by the PDCP entity employing the ROHC algorithm. In accordance with the PDCP protocol, the use of header compression is optional and the level of compression may be dynamically varied, and is preferably increasing as the compression index is built up.

For clarity, the embodiment of FIG. 4 illustrates a header compressor 403 connected to the packet processor 401, but in the preferred embodiment the header compression and ordering into packet data units is performed as an integrated function.

The header compressor 403 is connected to a communication processor 405 for communicating the packet data unit from the header compressor in accordance with a radio link control protocol. The radio link control protocol resides at a lower level of the layered network structure than the packet protocol and further comprises at least one acknowledged and one unacknowledged mode. FIG. 4 illustrates the preferred embodiment, wherein the communication processor 405 comprises a radio link controller 407 connected to a transmit processor 409 that implements the lower layers of the communication protocol.

In the preferred embodiment, the radio link protocol is an RLC protocol as specified by 3GPP, comprising the RLC Unacknowledged Mode (RLC-UM), the RLC Transparent Mode (RLC-TM) and the RLC Acknowledged Mode (RLC-AM) as previously described.

The embodiment of FIG. 4 further comprises a selector 411 for selecting a selected mode of the radio link control protocol as an unacknowledged mode or as an acknowledged mode in response to a header compression characteristic of the packet protocol applied to the packet data unit. In order to do so, the selector 411 is connected to the header compressor 403. Further, the selector 411 is connected to the packet processor 401 allowing the selection of the appropriate RLC mode to be further in response to other characteristics of the data or the communication.

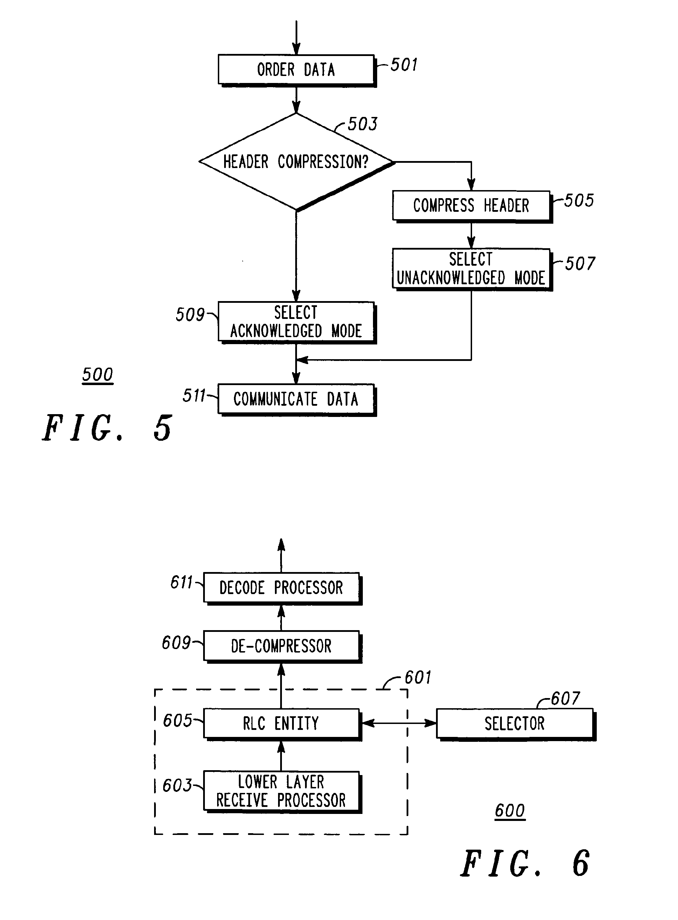

FIG. 5 is an illustration of a flowchart 500 of the operation of the apparatus of FIG. 4 in accordance with an embodiment of the invention.

In step 501, the packet processor 501 orders the data in at least one packet data unit comprising header information in accordance with the packet protocol. In step 503, the header compressor 403 determines if header compression is to be applied to the current packet data unit. If so, the process continues in step 505 by the header compressor 403 compressing the header in accordance with the appropriate protocol, which in the preferred embodiment is the ROHC protocol.

Step 405 is continued in step 507 wherein an unacknowledged mode of the radio link protocol is selected by the selector 411. In the preferred embodiment either the RLC-UM or RLC-TM mode is thus chosen. If header compression is not employed, step 503 is followed by step 509 and an acknowledged mode of the radio link protocol is chosen, i.e. the RLC-AM in the preferred embodiment. Thus step 503, 507 and 509 together selects a selected mode of the radio link control protocol as an unacknowledged mode or as an acknowledged mode in response to a header compression characteristic of the packet protocol applied to the packet data unit.

Both step 507 and 509 are followed by step 511 wherein the resultant packet data unit is communicated by the communication processor 405 in accordance with the chosen radio link control protocol.

Thus, the radio link level protocol is chosen such that it is better suited for individual packet data units and the header compression applied to the packet data units. Thus, when low levels of compression is used (i.e. the headers are large) an acknowledged mode of the radio link are used thereby resulting in efficient and low data rate communication of the PDCP packet data units. Consequently, as error detection is maintained at the lower radio link control layer, building the compressed header will be more time efficient resulting in improved efficiency on the radio link.,. At higher header compression, header retransmission is likely and/or losses of header information have less impact. Therefore it is not necessary to require error free guaranteed reception of each header. In this case, the unacknowledged protocol is used and retransmissions can only result from the ROHC entity. This result in a reduction of the resource and delay inherent in using the radio link control acknowledged modes thereby improving the resource utilisation.

In accordance with the preferred embodiment of the invention, the step of selection comprises selecting the unacknowledged mode when the header compression characteristic corresponds to a header compression above a threshold and selecting the acknowledged mode when the header compression characteristic corresponds to a header compression below the threshold. Specifically the threshold may be set such that the unacknowledged mode is selected when the header compression characteristic indicates that header compression is used by the packet protocol, and the acknowledged mode is selected when the header compression characteristic indicates that header compression is not used by the packet protocol. This corresponds to the specific case of having a threshold equivalent to no compression.

Determining if acknowledged mode or unacknowledged mode is used in response to a threshold for the size of the header is equivalent to selecting the mode in response to a threshold for the level of compression, as a short header results from high compression and a long header results from low compression.

In the header compression scheme of the preferred embodiment, the size of the PDU header changes with time. Initially the header will be large and no compression will be applied, but as the compression index builds up, the compression will increase and the header will decrease in size. Please refer to 3GPP TR 25.860 section 5.1.4 for a more detailed description. Thus in the preferred embodiment, the compression changes dynamically, and by selection between acknowledged and unacknowledged mode of the RLC protocol dependent on whether the compression is above or below a certain limit achieves a very simple decision process, which ensures that the best suited RLC protocol is chosen.

Further, in header compression protocols such as ROHC, the compression level may change dynamically. For example, radio conditions may deteriorate causing the ROHC algorithm to loose synchronisation or change the dynamic part of the header information thereby requiring a new compression index to be built up. Alternatively, the nature of the service or communication link may change significantly requiring the header to change drastically therefore requiring a new compression index.

In these cases, the compression will change drastically between PDUs, and using a fixed threshold allows the selector to easily follow these changes and thus continuously select an appropriate RLC algorithm. Specifically, simply choosing the acknowledged mode when no compression and the unacknowledged mode when compression is applied makes for a very simple embodiment, as the selector can easily be included in the header compressor.

In the preferred embodiment, the selection of the radio link control mode is not only in response to the header compression characteristic but also to other parameters. Thus in the preferred embodiment, the selected mode is further selected in response to whether the data is real time data or not, and additionally or alternatively to the sensitivity of the data to packet loss.

Communication of packet data using the unacknowledged mode typically leads to higher error rates than for the acknowledged mode. However, the impact of such errors is different for different services, and the selection of the RLC mode is preferably also in response to the impact of packet errors on the service used. Specifically, in the preferred embodiment, the thresholds for header compression used to determine if unacknowledged mode or acknowledged mode is used for the RLC layer are different for different services. Thus the sensitivity to data errors is determined for each service. Typically these values are predetermined, such that it is known, for example, that a voice call has a relatively low sensitivity, whereas some kind of data information has a high sensitivity. In accordance with the preferred embodiment, the threshold of header compression below which acknowledged mode is used is higher for sensitive data such as a data call than for an error insensitive call such as a voice call.

Further, acknowledged mode tends to result in increased throughput delay and some services are more sensitive to delays than others. For example, a real time voice call is sensitive to delays, whereas email data communication is not. Therefore, the preference of unacknowledged mode to acknowledged mode increases for increasing delay sensitivity and consequently the selected mode is also chosen in response to whether data is real time data or not. In the preferred embodiment, the threshold for using acknowledged mode or unacknowledged mode depends on the delay sensitivity of the data, and specifically such that the higher the sensitivity, the lower the threshold of compression before unacknowledged mode is used. Thus, in accordance with the preferred embodiment, the selection of the selected mode is further in response to the delay sensitivity of the data communicated.

In the preferred embodiment, the selection of the selected mode is in response to whether the packet protocol is using an acknowledged mode. As described previously, the ROHC algorithm uses a dynamic changing level of header compression starting with little compression and increasing this as the compression index is built up. ROHC further uses the U-mode (without feedback) at the beginning, and if no feedback channel is available will continue to use this. However, if a feedback channel is available and signalling is set up to the de-compressor indicating that it is feasible, the algorithm will transit to the other modes O-mode (Bi-directional Optimistic) and R-mode (Bi-directional Reliable) having feedback. If feedback is included at the PDCP layer, the preference for use of acknowledged mode in the radio link control layer reduces, and in the preferred embodiment this factor is included in the selection process. In a very simple embodiment, the choice of acknowledged mode or unacknowledged mode is simply made dependent on the feedback mechanism of the packet data protocol. Specifically if a feedback mechanism is employed in the packet protocol, the unacknowledged mode of the radio link control protocol will be used, and if no feedback mechanism is employed in the packet protocol, the acknowledged mode of the radio link control protocol will be used. In this embodiment, the feedback mode of the packet protocol acts as the header compression characteristic used in the selector.

However, in the preferred embodiment, the threshold for choosing between acknowledged mode and unacknowledged mode is determined in response to the feedback mode of the packet protocol. Specifically, if a feedback mechanism is used by the packet protocol, the threshold of header compression below which acknowledged mode is used will be higher than if no feedback is used.

In accordance with the preferred embodiment of the invention, a plurality of packet data units are communicated and the step of selection comprises dynamically updating the selection of the selected mode. Specifically the selected mode of each packet data unit is selected in response to the header compression characteristic of the packet protocol applied to that packet data unit. Thus for each packet data unit, the above described parameters are evaluated and used to determine a threshold of header compression for selecting between acknowledged mode and unacknowledged mode. The header compression of the packet data unit is then determined, and if below a certain level unacknowledged mode is used and otherwise acknowledged mode is used. Consequently, a system is achieved which dynamically chooses between different acknowledgment configurations of the radio link layer, so that the best suited configuration for the current conditions are used.

Further, the preferred embodiment comprises a compressor for performing the header compression on a plurality of packet data units; a de-compressor for performing header de-compression on a plurality of packet data units; and a communication channel between the compressor and de-compressor. In this embodiment, the communication system is operable to maintain an ordering of packets over the communication channel between the compressor and the de-compressor. In typical packet based communication systems, the routing between a source and a destination varies from packet to packet. The delay of different routes can be different, and therefore the order in which the packets are received may be different than the order in which they were transmitted. In the preferred embodiment of the current invention, the channel between the header compressor and de-compressor is such that packets are received in the same order as they are transmitted. This can be achieved by controlling the routing of data packets, and specifically for communication over the air interface packets are normally received in the same order as transmitted.

The previous discussion has focussed on a description of embodiments of the invention at the transmitting side of a communication. However, the invention is equally applicable to a receiving entity, and the modifications needed for the complementary operation of receiving embodiments will be readily apparent to the person skilled in the art.

For further clarification, FIG. 6 is an illustration of an embodiment of a receiving apparatus 600 in accordance with an embodiment of the invention.

The apparatus 600 comprises a receive processor 601 for receiving at least one packet data unit in accordance with a radio link control protocol. Again, the radio link control protocol resides at a lower level of the layered network structure and comprises at least one acknowledged and one unacknowledged mode. The receive processor 601 comprises a lower layer receive processor 603 which is responsible for all functions below the radio link control layer, which are required to receive communication. The receive processor 601 further comprises a radio link control entity 605 connected to the lower layer receive processor 603. The radio link control entity 605 is responsible for performing all the operations of the radio control link layer required. The radio link control entity 605 is connected to a selector 607 for selecting a selected mode of the radio link control protocol as an unacknowledged mode or as an acknowledged mode in response to a header compression characteristic of the packet protocol applied to the packet data unit.

In the shown embodiment, the header compression characteristic is derived by information obtained by the selector 607 from the radio link control entity 605. Specifically, the radio link control entity 605 may exchange signalling information with the radio link control entity of the transmitting side, with the information being indicative of whether an acknowledged mode or unacknowledged mode is used. Alternatively, it may determine this information directly from the received data. This information can be passed to the selector 207 as indicative of the header compression used since acknowledged mode in accordance with the described embodiments tends to be used for lower compression values.

The radio link control entity 605 is connected to a header de-compressor 609, which performs the inverse function of the header compressor at the transmitting side, and thus restores the original uncompressed header. The de-compressor 609 is further connected to a decode processor 611, which decodes the data in the packet data unit in accordance with the packet protocol. In the preferred embodiment, the decode processor implements all functions of the packet protocol layer and provides suitable communication mediums to the above layers.

In a slightly modified embodiment, the selector 607 is connected directly to the de-compressor 609 and the header compression information is obtained from the de-compressor 609. This can be more practical in some situations as the de-compressor 609 is responsible for performing the de-compression of the header, and therefore will have more specific information available relating to the header compression.

It will be apparent to the skilled person that corresponding entities of the transmit and receive side can use different techniques for configuring themselves to be compatible with the mode used at the other end. In the preferred embodiment, the different entities communicate with each other through in-band or out of band signalling as is well known in the art.

Thus in a specific embodiment two RLC configurations are used for one radio bearer, one being RLC-AM and one being RLC-UM/or RLC TM. The two configurations are used if header compression (ex. ROHC) can be applied to the received packets to be managed locally within the PDCP entity. The switching between the RLC modes is such that RLC-AM is used for full header transmission, and RLC-UM or RLC TM is used for the rest of the data with compressed header, if it is a real-time (conversational or streaming) data session with no sensitivity to service data unit (SDU) losses, as for example Voice over IP (VoIP). During the configuration of the PDCP layer and when header compression applies, the PDPC entity containing Compressor/De-compressor functionality is configured to allow RLC AM and RLC UM/TM dynamically for the same radio bearer. Switching of RLC mode should be known in both ends of PDCP entities (compressor and de-compressor). The choice of RLC mode may depend on the header compression protocol transmission mode. Hence, if it is a unidirectional mode and the full header is sent, RLC AM is used. If there is a bi-directional mode between the compressor and de-compressor, then RLC UM is used. In this case, the compression mechanism provides feedback.

In the embodiment, the PDCP-SDU numbering is maintained as defined in the 3GPP specifications and used for serving RNC relocation purposes. The PDCP-SDU numbers should guarantee the sequence of SDUs received from the 2 different configurations and keep them in order. Further the PDPC entity decides the RLC mode to use according to the criteria defined above and requirements indicated in 3GPP TR 25.860. The PDCP entity is further responsible for the sequence of the SDUs in the receiving side. Further, the entity is responsible for synchronising the used RLC mode between the PDCP entities where each the compressor and de-compressor resides for that radio bearer.

Furthermore, the channel between compressor and de-compressor maintains packet ordering, i.e., the de-compressor receives packets in the same order as the compressor sends them (Reordering before the compression point, however, is dealt with, i.e., there is no assumption that the compressor will only receive packets in sequence). Also, the channel between compressor and de-compressor does not duplicate packets. (Duplication before the compression point, however, is dealt with, i.e., there is no assumption that the compressor will receive only one copy of each packet.)

The invention can be implemented in any suitable form including hardware, software, firmware or any combination of these. However, preferably, the invention is implemented as computer software running on one or more data processors. The elements and components of an embodiment of the invention may be located in the core network, the radio access network or any suitable physical or functional location. Indeed the functionality may be implemented in a single unit, in a plurality of units or as part of other functional units. As such, the invention may be implemented in a single unit or may be physically and functionally distributed in the network. The described embodiments have focussed on a functional description and it will be evident that the individual blocks described need not be separate logical, functional or physical entities but may be integrated with any other functional block in any suitable form. Preferably all functionality related to either the receiving side and/or the transmitting side are implemented as firmware or software in a single suitable processor.

It will be clear that the invention tends to provide the following advantages, either singly and/or in any combination
- A system is provided allowing for the best suited radio link control configuration to be dynamically chosen
- The system provided optimises the radio link control configuration for the header compression currently employed
- A system is provided which can achieve less resource usage thereby resulting in a higher capacity of the communication system.
- A system is provided which can provide lower throughput delays for retransmissions thereby providing higher quality of service
- A system is provided where lower layers can ensure error free transmission thereby resulting in a simpler, faster and less computationally intensive handling of retransmissions.

## Claims

1. A method of communicating data for a cellular communication system (200) having a layered network structure (300) communicating with at least one user equipment (205, 207, 209), a first layer of the layered network structure (300) comprising a packet protocol having a protocol for variable header compression;
ordering (501) the data in at least one packet data unit comprising header information in accordance with the packet protocol;
communicating (511) the packet data unit in accordance with a radio link control protocol; the radio link control protocol residing at a lower level of the layered network structure (300) than the packet protocol and comprising at least one acknowledged and one unacknowledged mode;
**characterised by** further comprising the step of:
selecting (507, 509) a selected mode of the radio link control protocol as an unacknowledged mode or as an acknowledged mode in response to a header compression characteristic of the packet protocol applied to the packet data unit.

2. A method as claimed in any of the preceding claims wherein the selection of the selected mode is further in response to a delay sensitivity of the data.

3. A method as claimed in any of the preceding claims wherein the selection of the selected mode is further in response to a sensitivity of the data to packet loss.

4. A method as claimed in any of the preceding claims wherein the selection of the selected mode is in response to whether the packet protocol is using an acknowledged mode.

5. A method as claimed in any of the preceding claims wherein the step of selection comprises selecting the unacknowledged mode when the header compression characteristic corresponds to a header compression above a threshold and selecting the acknowledged mode when the header compression characteristic corresponds to a header compression below the threshold.

6. A method as claimed in any of the preceding claims wherein the step of selection comprises selecting the unacknowledged mode when the header compression characteristic indicates that header compression is used by the packet protocol and selecting the acknowledged mode when the header compression characteristic indicates that header compression is not used by the packet protocol.

7. A method as claimed in any of the preceding claims wherein the packet protocol is a Packet Data Convergence Protocol (PDCP).

8. A method as claimed in claim 7 wherein the Packet Data Convergence Protocol (PDCP) is substantially as defined in Third Generation Partnership Project (3GPP) specification TS 25.323

9. A method as claimed in any of the preceding claims wherein the cellular communication system (200) is a Universal Mobile Telecommunication system (200) (UMTS) cellular communication system (200).

10. A method as claimed in any of the preceding claims wherein the packet data unit is communicated over an air interface.

11. A method as claimed in any of the preceding claims wherein a plurality of packet data units are communicated and the step of selection comprises dynamically updating the selection of the selected mode.

12. A method as claimed in claim 11 wherein the step of selection selects the selected mode of each packet data unit in response to the header compression of the packet protocol applied to that packet data unit.

13. A method as claimed in any of the preceding claims wherein the unacknowledged mode is a Radio Link Control- Unacknowledged Mode (RLC-UM) or a Radio Link Control- Transparent Mode (RLC-TM) substantially as defined in the Third Generation Partnership Project (3GPP) specification TS 25.322.

14. A method as claimed in any of the preceding claims wherein the unacknowledged mode is a Radio Link Control- Acknowledged Mode (RLC-AM) substantially as defined in the Third Generation Partnership Project (3GPP) specification TS 25.322.

15. A method as claimed in any of the preceding claims wherein the header compression is according to a Robust Header Compression (ROCH) substantially as defined in Internet Engineering Task Force (IETF) specification RFC 3095.

16. An apparatus for communicating data in a cellular communication system (200) having a layered network structure (300) communicating with at least one user equipment (205, 207, 209), a first layer of the layered network structure (300) comprising a packet protocol having an protocol for variable header compression; the apparatus comprising:
means (401) for ordering the data in at least one packet data unit comprising header information in accordance with the packet protocol;
means (405, 409) for communicating the packet data unit in accordance with a radio link control protocol; the radio link control protocol residing at a lower level of the layered network structure (300) than the packet protocol and comprising at least one acknowledged and one unacknowledged mode;
**characterised by** further comprising:
selection means (411) for selecting a selected mode of the radio link control protocol as an unacknowledged mode or as an acknowledged mode in response to a header compression characteristic of the packet protocol applied to the packet data unit.

17. An apparatus as claimed in claim 16 wherein the selection means further are operable to select the selected mode in response to a delay sensitivity of the data.

18. An apparatus as claimed in any of the preceding claims 16 to 17 wherein the selection means further are operable to select the selected mode in response to a sensitivity of the data to packet loss.

19. An apparatus as claimed in any of the preceding claims 16 to 18 wherein the selection means further are operable to select the selected mode in response to whether the packet protocol is using an acknowledged mode.

20. An apparatus as claimed in any of the preceding claims 16 to 19 wherein the selection means is operable to select the unacknowledged mode when the header compression characteristic corresponds to a header compression above a threshold and selecting the acknowledged mode when the header compression characteristic corresponds to a header compression below the threshold.

21. An apparatus as claimed in any of the preceding claims 16 to 20 wherein the selection means is operable to select the unacknowledged mode when the header compression characteristic indicates that header compression is used by the packet protocol and selecting the acknowledged mode when the header compression characteristic indicates that header compression is not used by the packet protocol.

22. An apparatus as claimed in any of the preceding claims 16 to 22 wherein the packet protocol is a Packet Data Convergence Protocol (PDCP).

23. An apparatus as claimed in claim 22 wherein the Packet Data Convergence Protocol (PDCP) is substantially as defined in the Third Generation Partnership Project (3GPP) specification TS 25.323

24. An apparatus as claimed in any of the preceding claims 16 to 23 wherein the cellular communication system (200) is a Universal Mobile Telecommunication system (200) (UMTS) cellular communication system (200).

25. An apparatus as claimed in any of the preceding claims 16 to 24 wherein the means for means for communicating are operable to communicate the packet data unit over an air interface.

26. An apparatus as claimed in any of the preceding claims 16 to 25 wherein the apparatus is operable to communicate a plurality of packet data units and the selection means is operable to dynamically update the selection of the selected mode.

27. An apparatus as claimed in claim 26 wherein the selection means are operable to select the selected mode of each packet data unit in response to the header compression of the packet protocol applied to that packet data unit.

28. An apparatus as claimed in any of the preceding claims 16 to 27 wherein the unacknowledged mode is a Radio Link Control-Unacknowledged Mode (RLC-UM) or a Radio Link Control- Transparent Mode (RLC-TM) substantially as defined in the Third Generation Partnership Project (3GPP) specification TS 25.322.

29. An apparatus as claimed in any of the preceding claims 16 to 28 wherein the unacknowledged mode is a Radio Link Control- Acknowledged Mode (RLC-AM) substantially as defined in the Third Generation Partnership Project (3GPP) specification TS 25.322.

30. An apparatus as claimed in any of the preceding claims 16 to 29 wherein the header compression is according to a Robust Header Compression (ROCH) substantially as defined in Internet Engineering Task Force (IETF) specification RFC 3095.

31. A cellular communication system (200) comprising the apparatus of any of the previous claims 16 to 30.

32. A cellular communication system (200) as claimed claim 31 further comprising:
a compressor for performing header compression on a plurality of packet data units;
a de-compressor for performing header de-compression on a plurality of packet data units; and
a communication channel between the compressor and de-compressor; and
wherein the communication system (200) is operable to maintain an ordering of packets over the communication channel between the compressor and the de-compressor.

33. A base station for a cellular communication system (200) comprising the apparatus of any of the previous claims 16 to 30.

34. A wireless user equipment (205, 207, 209) for a cellular communication system (200) comprising the apparatus of any of the previous claims 16 to 30.

35. A method of receiving data for a cellular communication system (200) having a layered network structure (300) communicating with at least one user equipment (205, 207, 209), a first layer of the layered network structure (300) comprising a packet protocol having a protocol for variable header compression;
receiving at least one packet data unit in accordance with a radio link control protocol; the radio link control protocol residing at a lower level of the layered network structure (300) than the packet protocol and
comprising at least one acknowledged and one unacknowledged mode and the packet data unit comprising header information;
decoding the data in the packet data unit in accordance with the packet protocol;
**characterised by** further comprising the step of:
selecting a selected mode of the radio link control protocol as an unacknowledged mode or as an acknowledged mode in response to a header compression characteristic of the packet protocol applied to the packet data unit.

36. A method as claimed in claim 35 wherein the selection of the selected mode is further in response to a delay sensitivity of the data.

37. A method as claimed in any of the preceding claims 35 to 36 wherein the selection of the selected mode is further in response to a sensitivity of the data to packet loss.

38. A method as claimed in any of the preceding claims 35 to 37 wherein the selection of the selected mode is in response to whether the packet protocol is using an acknowledged mode.

39. A method as claimed in any of the preceding claims 35 to 38 wherein the step of selection comprises selecting the unacknowledged mode when the header compression characteristic corresponds to a header compression above a threshold and selecting the acknowledged mode when the header compression characteristic corresponds to a header compression below the threshold.

40. A method as claimed in any of the preceding claims 35 to 39 wherein the step of selection comprises selecting the unacknowledged mode when the header compression characteristic indicates that header compression is used by the packet protocol and selecting the acknowledged mode when the header compression characteristic indicates that header compression is not used by the packet protocol.

41. A method as claimed in any of the preceding claims 35 to 40 wherein the packet protocol is a Packet Data Convergence Protocol (PDCP).

42. A method as claimed in claim 41 wherein the Packet Data Convergence Protocol (PDCP) is substantially as defined in Third Generation Partnership Project (3GPP) specification TS 25.323

43. A method as claimed in any of the preceding claims 35 to 42 wherein a plurality of packet data units are received and the step of selection comprises dynamically updating the selection of the selected mode.

44. A method as claimed in any of the preceding claims 35 to 43 wherein the unacknowledged mode is a Radio Link Control-Unacknowledged Mode (RLC-UM) or a Radio Link Control- Transparent Mode (RLC-TM) substantially as defined in the Third Generation Partnership Project (3GPP) specification TS 25.322.

45. A method as claimed in any of the preceding claims 35 to 44 wherein the unacknowledged mode is a Radio Link Control- Acknowledged Mode (RLC-AM) substantially as defined in the Third Generation Partnership Project (3GPP) specification TS 25.322.

46. A method as claimed in any of the preceding claims 35 to 45 wherein the header compression is according to a Robust Header Compression (ROCH) substantially as defined in Internet Engineering Task Force (IETF) specification RFC 3095.

47. An apparatus for receiving data in a cellular communication system (200) having a layered network structure (300) communicating with at least one user equipment (205, 207, 209), a first layer of the layered network structure (300) comprising a packet protocol having a protocol for variable header compression; the apparatus comprising:
means for receiving (601, 603, 605) at least one packet data unit in accordance with a radio link control protocol; the radio link control protocol residing at a lower level of the layered network structure (300) than the packet protocol and comprising at least one acknowledged and one unacknowledged mode and the packet data unit comprising header information;
means for decoding (611) the data in the packet data unit in accordance with the packet protocol;
**characterised by** further comprising:
means for selecting (607) a selected mode of the radio link control protocol as an unacknowledged mode or as an acknowledged mode in response to a header compression characteristic of the packet protocol applied to the packet data unit.

48. An apparatus as claimed in claim 47 wherein the selection means further are operable to select the selected mode in response to a delay sensitivity of the data.

49. An apparatus as claimed in any of the preceding claims 47 to 48 wherein the selection means further are operable to select the selected mode in response to a sensitivity of the data to packet loss.

50. An apparatus as claimed in any of the preceding claims 47 to 49 wherein the selection means further are operable to select the selected mode in response to whether the packet protocol is using an acknowledged mode.

51. An apparatus as claimed in any of the preceding claims 47 to 50 wherein the selection means is operable to select the unacknowledged mode when the header compression characteristic corresponds to a header compression above a threshold and selecting the acknowledged mode when the header compression characteristic corresponds to a header compression below the threshold.

52. An apparatus as claimed in any of the preceding claims 47 to 51 wherein the selection means is operable to select the unacknowledged mode when the header compression characteristic indicates that header compression is used by the packet protocol and selecting the acknowledged mode when the header compression characteristic indicates that header compression is not used by the packet protocol.

53. An apparatus as claimed in any of the preceding claims 47 to 52 wherein the packet protocol is a Packet Data Convergence Protocol (PDCP).

54. An apparatus as claimed in claim 53 wherein the Packet Data Convergence Protocol (PDCP) is substantially as defined in the Third Generation Partnership Project (3GPP) specification TS 25.323

55. An apparatus as claimed in any of the preceding claims 47 to 54 wherein the apparatus is operable to receive a plurality of packet data units and the selection means is operable to dynamically update the selection of the selected mode.

56. An apparatus as claimed in any of the preceding claims 47 to 55 wherein the unacknowledged mode is a Radio Link Control-Unacknowledged Mode (RLC-UM) or a Radio Link Control- Transparent Mode (RLC-TM) substantially as defined in the Third Generation Partnership Project (3GPP) specification TS 25.322.

57. An apparatus as claimed in any of the preceding claims 47 to 56 wherein the unacknowledged mode is a Radio Link Control- Acknowledged Mode (RLC-AM) substantially as defined in the Third Generation Partnership Project (3GPP) specification TS 25.322.

58. An apparatus as claimed in any of the preceding claims 47 to 57 wherein the header compression is according to a Robust Header Compression (ROCH) substantially as defined in Internet Engineering Task Force (IETF) specification RFC 3095.
